# EUROPEAN PATENT SPECIFICATION

(11) **EP 0 761 954 B1**
(45) Date of publication and mention of the grant of the patent: **07.06.2000**
(21) Application number: 96114666.9
(22) Date of filing: 12.09.1996
(51) Int. Cl.: F02D 41/40

(54) **Fuel injection control system for diesel engine**
Kraftstoffeinspritzregelsystem für einen Dieselmotor
Système de contrôle d'injection de carburant pour moteur diesel

(30) Priority: 12.09.1995 JP 23360295
(43) Date of publication of application: 12.03.1997
(73) Proprietor: MAZDA MOTOR CORPORATION, Aki-gun, Hiroshima 730-91 (JP)
(72) Inventor: Katsuyoshi, Iida, Aki-gun, Hiroshima-ken (JP); Yamaoka, Takahisa, Aki-gun, Hiroshima-ken (JP); Yuaka, Miyazaki, Aki-gun, Hiroshima-ken (JP); Katsuaki, Yasutomi, Aki-gun, Hiroshima-ken (JP); Yusuke, Seino, Aki-gun, Hiroshima-ken (JP); Tomoaki, Saito, Aki-gun, Hiroshima-ken (JP)
(74) Representative: Müller-Boré & Partner Patentanwälte

(56) References cited:
- EP-A- 0 135 460
- US-A- 4 590 907
- US-A- 4 671 236
- PATENT ABSTRACTS OF JAPAN vol. 010, no. 029 (M-451), 5 February 1986 & JP-A-60 184946 (TOYOTA JIDOSHA KK), 20 September 1985,

## Description

### BACKGROUND OF THE INVENTION

### Field of the Invention

This invention relates to a fuel injection control system for a diesel engine, and more particularly to a fuel injection control system for a diesel engine having a fuel injection pump provided with a timer piston which controls the fuel injection timing by a hydraulic pressure and an electronic control means which controls the hydraulic pressure acting on the timer piston.

### Description of the Related Art

A distribution type fuel injection pump for a diesel engine generally comprises a plunger for feeding fuel under pressure and for distributing fuel, a cam disk which is fixed to one end of the plunger and is provided with a cam face having the same number of projections as the number of cylinders of the engine, and a driving disk (roller holder) having the same number of rollers as the number of the projections on the cam face. A timer piston for adjusting the fuel injection timing is connected to the driving disk so that the phase of the input shaft of the fuel injection pump to the driving disk is changed with the position of the timer piston.

The timer piston is disposed in a cylinder in which a high pressure chamber is formed on one side of the timer piston and a low pressure chamber is formed on the other side of the timer piston. A fuel pressure on the discharge side of the pump acts on the high pressure chamber and a fuel pressure on the suction side of the pump and force of a timer spring act on the low pressure chamber. The position of the timer piston is determined according to the discharge pressure of the pump, which changes according to the engine speed, and the force of the timer spring, whereby the driving disk is rotated in a direction in which the fuel injection timing is advanced or retarded.

An electronic control fuel injection pump is provided with a timing control valve (duty valve) for finely controlling the fuel injection timing. The timing control valve is disposed in a fuel passage communicating the high pressure chamber and the low pressure chamber in the timer cylinder and adjusts leak from the high pressure chamber to the low pressure chamber through the fuel passage to change the pressure difference between the chambers, thereby changing the position of the timer piston which is determined by a balance between the timer spring and the pressure difference between the chambers.

The timer is provided with a position sensor which detects the position of the timer piston, and a control unit comprising a microcomputer controls the timing control valve on the basis of the output of the position sensor, the engine load and the like, thereby feedback-controlling the fuel pressure acting on the timer piston. (a hydraulic servo mechanism, Japanese Unexamined Patent Publication No. 7(1995)-27005)

The electronic control fuel injection pump is provided with an electronic governor which is actuated under the control of a control signal from the control unit to move back and forth a control sleeve of the pump, thereby controlling the fuel injection amount. In a diesel engine, the fuel injection amount can fluctuate by cylinder even if the fuel injection amount instructed by the control unit is the same due to fluctuation in the fuel injection pump and the differences among the individual fuel injection nozzles. The fluctuation in the fuel injection amount can cause uncomfortable vibrations during idle. In order to suppress such vibrations, there has been carried out a correction for compensating for fluctuation in the fuel injection amount (will be referred to as "by-cylinder control", hereinbelow). See Japanese Unexamined Patent Publication No. 5(1983)-240097.

In such a by-cylinder control, generally the rpm of each cylinder is calculated, and the difference between the rpm of each cylinder and a target rpm is obtained, and the correction amount for the next fuel injection amount is calculated and learned.

The rpm of each cylinder is obtained on the basis of the angular velocity which increases during the combustion stroke of the cylinder.

In an electronic control fuel injection pump for a common diesel engine evolved from a mechanical fuel injection pump, the fuel injection timing is changed by use of a mechanical means such as a roller. Since the fuel injection pressure is high, a large force is required to move the roller. Accordingly, the roller is moved by a hydraulic servo mechanism as described above.

Use of such a hydraulic servo mechanism in changing the fuel injection timing is advantageous in that know-how for designing, processing and assembly of mechanical fuel injection pumps can be utilized as they are, which results in low cost, that the hydraulic pressure source can be the pump itself, which results in reduction of the size of the overall system, and that the actuating force is large. However since the pressure in the hydraulic pressure source is generated by compression of fuel by a so-called feed pump, a high pressure pump which increases the pressure of fuel to be injected receives fuel from the feed pump and the feed pump is driven by the engine, use of such a hydraulic servo mechanism in changing the fuel injection timing is disadvantageous in the following points.
(1) The pressure of the feed pump is low when the engine speed is low and increases as the engine speed increases.
(2) When the pressure of the feed pump is low, it is difficult to effect an optimal control by the hydraulic servo mechanism. As a result, the fuel injection timing cannot be controlled.
(3) The relation between the rotational speed of the feed pump and the pressure generated by the feed pump can be changed by designing of the pump. However when the pump is designed so that a high pressure is obtained at a low idling speed, pump loss increases in a high rotational speed range and accordingly the pump pressure in a low speed range is limited.

Accordingly, in a high engine speed range, the fuel injection timing can be controlled within ±0.5° . However as the engine speed becomes lower (when the engine speed is 800rpm, the pump speed is 800/2=400rpm), fluctuation in the fuel injection timing increases (±1° ) and the engine speed fluctuates. The fluctuation in the engine speed due to fluctuation in the fuel injection timing cannot be suppressed by the conventional by-cylinder control where the rpm of each cylinder is detected and the fuel injection amount for each cylinder is changed, which results in uncomfortableness of the passengers and deterioration in automotive emission.

EP 0 135 460 discloses an electronic fuel control system for a fuel injection pump which controls the fuel injection amount. For changing the fuel injection timing a hydraulic servo mechanism as described above is used. The control system controls the fuel injection amount based on the determination of the time interval between the instant of commencement and the instant of the termination of a fuel injection stroke. However, this fuel control system does not provide any possibility to suppress fluctuations of the engine speed due to a fluctuation in the fuel injection timing.

It is the object of the invention to provide a fuel injection control system for a diesel engine, which can suppress fluctuation in the engine speed in a low engine speed range due to fluctuation in the fuel injection timing.

This object is fulfilled by a fuel injection control system having the features disclosed in claim 1. Preferred embodiments are defined in the dependent subclaims.

In accordance with the present invention, there is provided a fuel injection control system for a diesel engine having a fuel injection pump provided with a timer piston which controls the fuel injection timing by a hydraulic pressure and an electronic control system which controls the hydraulic pressure acting on the timer piston, the control system comprising
a detecting means which detects fluctuation in the fuel injection timing under a predetermined operating condition of the engine, and
a control means which controls the fuel injection amount on basis of the output of the detecting means according to the fluctuation in the fuel injection timing detected by the detecting means so that the fluctuation in the engine speed is suppressed.

Preferably the detecting means detects an actual fuel injection timing and the control means controls the fuel injection amount on the basis of the difference between a target fuel injection timing and the actual fuel injection timing detected by the detecting means.

Preferably the fuel injection system further comprises a calculating means which calculates the target fuel injection timing under a predetermined operating condition of the engine.

For example, the fuel injection amount is increased when the actual fuel injection timing is retarded from the target fuel injection timing and reduced when the actual fuel injection timing is advanced from the target fuel injection timing.

Preferably the control means controls the fuel injection amount during idling of the engine.

Preferably the control means controls the fuel injection amount on the basis of both the fluctuation in the fuel injection timing and the cylinder-to-cylinder difference in the rotational speed.

Generally the control means controls the fuel injection amounts for all the cylinders so that the fuel injection amounts for all the cylinders are simultaneously increased or reduced. That is, the fuel injection amounts for all the cylinders are increased when the actual fuel injection timing is retarded from the target fuel injection timing and reduced when the actual fuel injection timing is advanced from the target fuel injection timing.

Preferably the control means effects the fuel injection amount control based on the fluctuation in the fuel injection timing after effecting the fuel injection amount control based on the cylinder-to-cylinder difference in the rotational speed.

In accordance with a preferred embodiment of the present invention, the fuel injection amount is controlled so that fluctuation in the engine speed is suppressed according to fluctuation in the fuel injection timing. Accordingly, fluctuation in the engine speed and deterioration in emission due to fluctuation in the fuel injection pump which is apt to occur especially in a low engine speed range can be suppressed without increasing the discharge pressure of the fuel injection pump while taking advantage of the hydraulic servo mechanism that the actuating force is large. The idle speed can be more quickly stabilized by first effecting the by-cylinder control of the fuel injection amount based on the cylinder-to-cylinder difference in the rotational speed and then effecting the fuel injection amount control based on the fluctuation in the fuel injection timing.
Figure 1 is an enlarged cross-section view of a distribution type fuel injection pump employed in an embodiment of the present invention, wherein the feed pump and the timer piston are shown in a position rotated by 90°,
Figure 2 is a perspective view of the electronie governor of the fuel injection pump shown in Figure 1,
Figure 3 is a view for illustrating the structure of the electronic governor,
Figure 4 is a graph showing change in the inductance of the detecting winding with the rotational angle of the rotor of the electronic governor,
Figure 5 is an enlarged cross-sectional view of the portion of the pump shown in Figure 1 which controls the fuel injection timing,
Figure 6 is a schematic view showing a diesel engine with supercharger in which the fuel injection pump shown in Figure 1 is employed,
Figure 7 is a block diagram for illustrating the structure of the control unit employed in an idle speed control system(a fuel injection control system) in accordance with an embodiment of the present invention,
Figure 8 is a block diagram for illustrating the structure of the fuel injection pump employed in the idle speed control system,
Figure 9 is a control diagram showing the logic for operating increase and reduction of the fuel injection amount from fluctuation in the fuel injection timing, and
Figure 10 is a flow chart showing an example of the fuel injection amount control routine executed by the control unit shown in Figure 6.

### DESCRIPTION OF THE PREFERRED EMBODIMENT

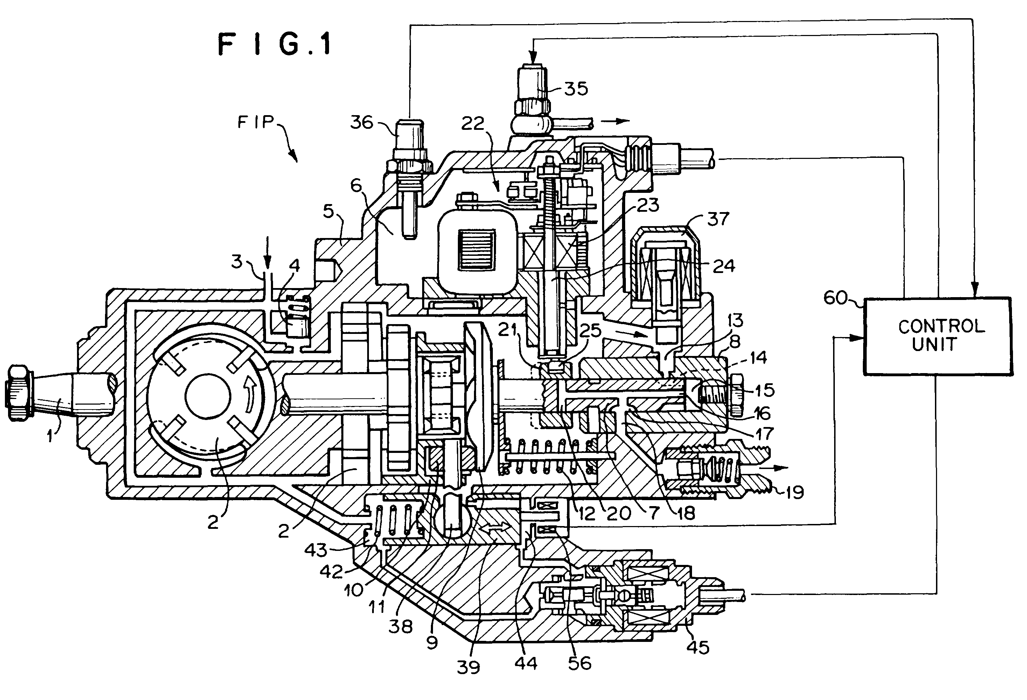

In Figure 1, a fuel injection pump FIP is of a known structure and comprises a drive shaft 1 driven by an engine and a feed pump 2 driven by the drive shaft 1. Fuel is sucked through a fuel inlet port 3, the fuel supply pressure is regulated by a regulating valve 4 and then fuel is supplied to a pump chamber 6 is a pump body 5. A plunger 7 is slidably fitted in a plunger barrel 8 formed in the pump body 5. A cam disk 9 connected to the drive shaft 1 by way of a coupling is fixed to the base of the plunger 7.

A cam face having a plurality of (equal to the number of cylinders of the engine) projections is formed on the cam disk 9 and the cam face is pressed against rollers 11 held on a driving disk (roller holder) 10 by a plunger spring 12. When the drive shaft 1 rotates, the cam disk 9 is reciprocated while rotating on the rollers 11, thereby reciprocating the plunger 7 in order to suck fuel and feed it under pressure and rotating the same in order to distribute fuel.

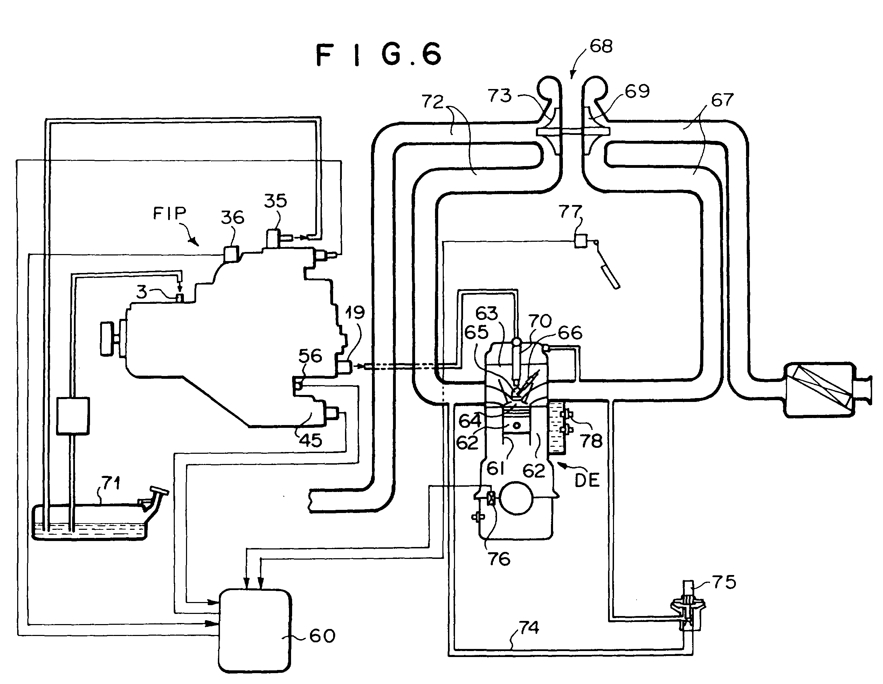

In a suction stroke where the plunger 7 is moved leftward in Figure 1, the fuel supplied to the pump chamber 6 is fed to a pump chamber 15 defined between the plunger barrel 8 and the plunger 7 through an inlet port 13 and one of inlet grooves 14 formed on the end of the plunger 7 to extend in the longitudinal direction of the plunger 7. In a discharge stroke where the plunger 7 is moved rightward in Figure 1, the inlet port 13 is brought out of communication with the inlet grooves 14 so that the fuel in the pump chamber 15 is compressed and fed to one of fuel injection nozzles 70 (Figure 6) through a longitudinal bore 16 16 in the plunger 7, a distribution port 17, one of distribution passages 18 and a delivery valve 19, and then the fuel is injected into one of the cylinders of the engine. Each time the suction stroke and the discharge strokes are repeated, the distribution passage 18 is changed to the adjacent one.

A cut-off port 20 is formed in the portion of the plunger exposed out of the plunger barrel 8 in communication with the longitudinal bore 16 and a control sleeve 21 is slidably fitted on the plunger 7 to cover the cut-off port 20.

The fuel injection pump FIP is provided with a rotary type electronic governor 22 having a rotor 23. The control sleeve 21 is in engagement with an eccentric end portion 25 of a shaft 24 mounted on the rotor 23. When the rotor 23 rotates, the eccentric end portion 25 is moved in the axial direction of the plunger 7 and moves the control sleeve 21 in the axial direction of the plunger 7 by way of the engagement therewith, whereby the timing the cut-off valve 20 comes to depart from the control sleeve 21 and is opened to the pump chamber 6 is changed, that is, the timing the fuel injection is ended is changed.

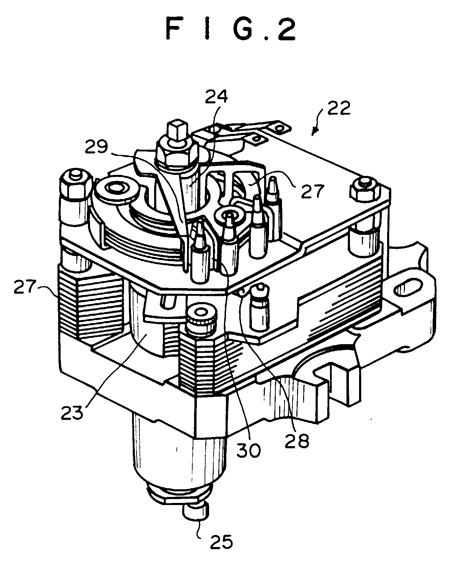

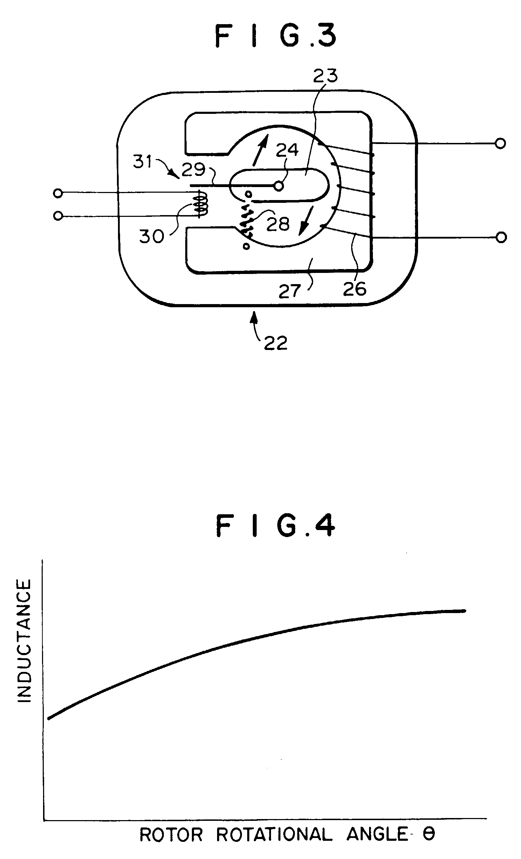

As shown in Figures 2 and 3, the electric governor 22 comprises a core 27 around which a drive winding 26 is wound, said rotor 23 which is disposed in the core 23 and rotated in the clockwise direction in Figure 3 by a drive current flowing through the drive winding 26, a return spring 28 which returns the rotor 23 to the original position, an iron piece 29 which is fixed to the shaft 24, to which the rotor 23 is fixed, to be rotated together with the rotor 23, and a detecting winding 30 whose inductance changes according to the rotating angle of the iron piece 29, i.e., the rotating angle θ of the rotor 23. A control sleeve position sensor 31 is formed by the iron piece 29 and the detecting winding 30.

The control sleeve 21 is servo-controlled by a control unit 60 by way of the electronic governor 22 which the position of the control sleeve 21 is constantly watched by the control sleeve position sensor 31. When the fuel injection amount is to be increased, a drive current is supplied to the drive coil 26 to rotate the rotor 23 in the clockwise direction in Figure 3 from the original position (servo control). When the fuel injection amount is to be reduced, the drive current is cut to permit the return spring 28 to return the rotor 23 to the original position.

An overflow valve 35 for overflowing a part of fuel into a fuel reservoir 71 (Figure 6) is provided on an upper portion of the pump body 5. Reference numeral 36 denotes a fuel temperature sensor which detects the temperature of the fuel in the pump chamber 6 and reference numeral 37 denotes a magnet valve which cuts fuel to be sucked into the pump chamber 6 when the engine is stopped.

The driving disk 10 is rotatable about the longitudinal axis of the plunger 7. One end of a lever 38 is connected to the driving disk 10 by way of a pin and the other end of the lever 38 is in engagement with a timer piston 39 of a fuel injection timing control system.

The fuel injection timing control system comprises a cylinder 41 formed on the pump body 5 and the timer piston 39 is slidably received in the cylinder 41. A low pressure chamber 43 is formed in one end portion of the timer piston 39 and a high pressure chamber 44 is formed in the other end portion of the timer piston 39. A timer spring 42 is contained in the low pressure chamber 43 and the fuel pressure in the pump chamber 6 acts on the high pressure chamber 44. The position of the timer piston 39 is determined by a balance between the force of the timer spring 42 and the pressure difference between the chambers 43 and 44. The position of the driving disk 10 in the circumferential direction is determined by the position of the timer piston 39.

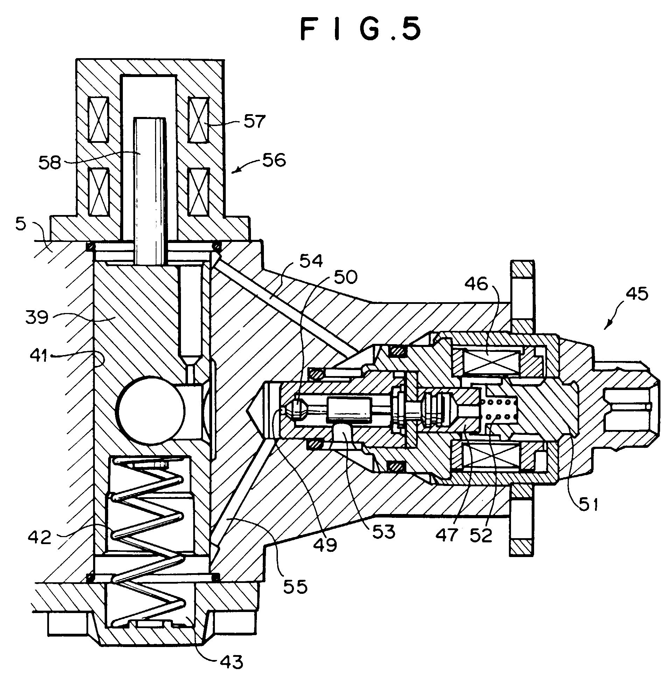

When the position of the driving disk 10 in the circumferential direction changes, the position of the contact between the rollers 11 and the cam face of the cam disk 9 changes and the phase in which the plunger 7 is actuated in response to rotation of the drive shaft 1 changes, whereby the fuel injection timing is changed. In this particular embodiment, the fuel injection timing is advanced when the timer piston 39 is moved downward as seen in Figure 5 under the pressure in the high pressure chamber 44 overcoming the force of the timer spring 42 and is retarded when the timer piston 39 is moved upward under the force of the spring 42.

A timing control valve 45 fixed to the pump body 5 is provided with an electromagnetic plunger 47 which is moved back and forth by an electromagnetic effect of a solenoid 46. A needle 50 which is adapted to be seated in a hole 49 formed on the front end of a valve holder 48 is integrally connected to the electromagnetic plunger 47. When the solenoid 46 is not energized, the plunger 47 is urged toward the hole 49 under the force of a spring 52 compressed between the plunger 47 and a fixed rod 51, whereby the hole 49 is closed as shown in Figure 5. When the solenoid 46 is energized, the plunger 47 is moved toward the fixed rod 51 overcoming the force of the spring 52 and the hole 49 is communicated with a side hole 53 formed in the side wall of the valve holder 48 through the passage around the needle 50.

The high pressure chamber 44 is communicated with the side hole 53 of the timing control valve 45 through a high pressure passage 54, and the low pressure chamber 43 is communicated with the hole 49 on the front end of the timing control valve 45 through a low pressure passage 55. Accordingly, by changing opening of the timing control valve 45, leak of the fuel pressure from the high pressure chamber44 to the low pressure chamber 43 can be controlled to change the pressure difference between the chambers 43 and 44, whereby the position of the timer piston 39 which is determined by a balance between the timer spring 42 and the pressure difference between the chambers 43 and 44.

The position of the timer piston 39 is detected by a timer position sensor 56. The timer position sensor 56 comprises a detecting winding 57 and a rod 58 connected to the timer piston 39. The position signal from the timer position sensor 56 is input into the control unit 60 and the position of the timer piston 39 is duty-controlled on the basis of the difference between the position signal and a signal corresponding to a target fuel injection timing determined according to the engine speed, the fuel temperature, the coolant temperature and the like.

As shown in Figure 6, a diesel engine DE is provided with a fuel injection pump FIP having a structure described above and comprises a plurality of cylinders 61. In Figure 6, only one of the cylinders 61 is shown. A piston 62 is received in each of the cylinders 61 and a main combustion chamber 64 is formed by the cylinder 61, the piston 62 and a cylinder head 63. A sub-combustion chamber 65 is formed in communication with the main combustion chamber 64 and fuel is injected into the sub-combustion chamber 65 from a fuel injection nozzle 70. Each sub-combustion chamber 65 is provided with a glow plug 66 for assisting start.

A compressor 69 of a turbocharger 68 is disposed in an intake passage 67 of the engine DE and a turbine 68 of the turbocharger 68 is disposed in an exhaust passage 72.

The engine DE is further provided with a recirculation passage 74 for recirculating a part of exhaust gas in the exhaust passage 72 to the intake passage 67, and an EGR valve 75 is disposed in the recirculation passage 74.

The control unit 60 effects by-cylinder control of the engine DE by controlling the electronic governor 22 and the timing control valve 45 on the basis of outputs of an engine speed sensor 76, an accelerator opening sensor 77, a coolant temperature sensor 78, the fuel temperature sensor 36, the control sleeve position sensor 31, the timer position sensor 56 and the like. Since a fuel injection pump FIP is generally provided with a pump speed sensor, the pump speed sensor may be used in place of the engine speed sensor 76.

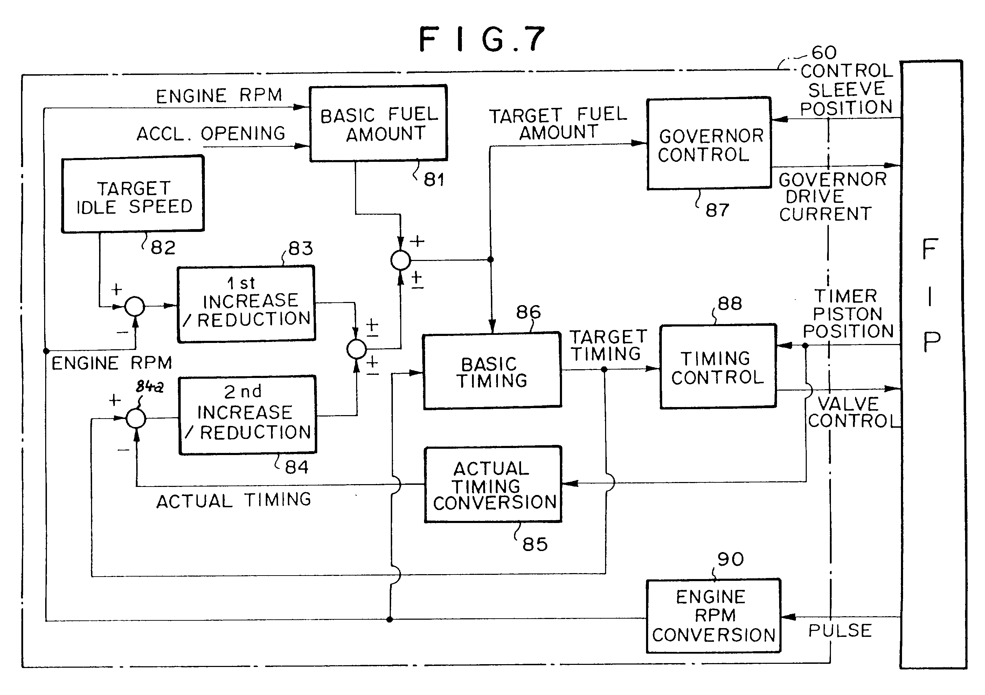

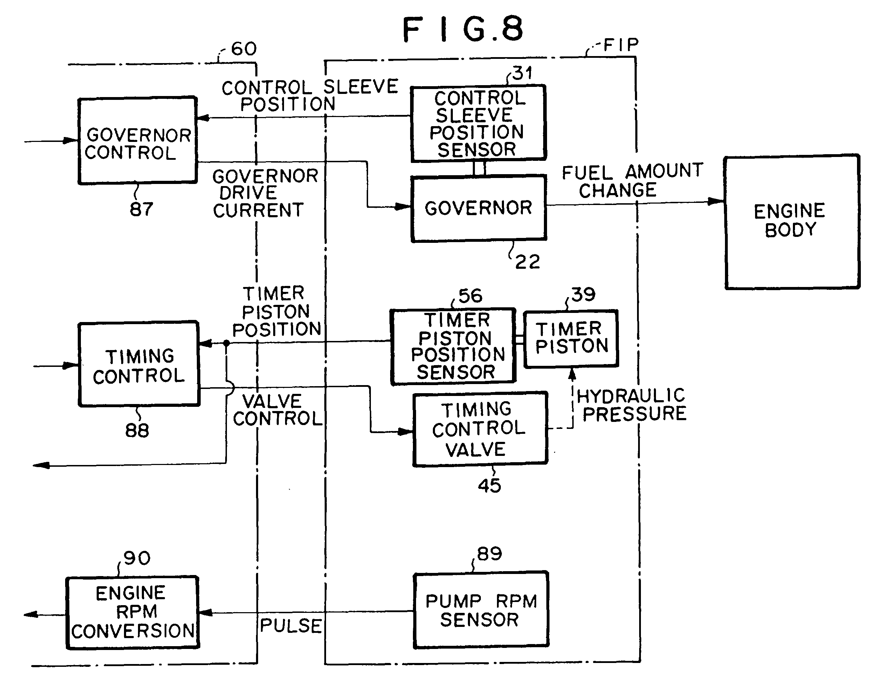

An idle speed control system (a fuel injection control system) in accordance with an embodiment of the present invention will be described with reference to Figures 7 to 10, hereinbelow. As shown in Figure 7, the control unit 60 comprises a basic fuel injection amount calculating section 81 which calculates a basic fuel injection amount on the basis of the engine speed and the accelerator opening, a target idle speed setting section 82, a first fuel injection amount increase/reduction section 83 which calculates increase or reduction of the fuel injection amount on the basis of a speed difference for each cylinder determined according to the difference between the target idle speed and the actual engine speed, and a second fuel injection amount increase/reduction section 84 which calculates increase or reduction of the fuel injection amount on the basis of fluctuation in the fuel injection timing. An actual injection timing conversion section 85 which converts the position of the timer piston 39 detected by the timer position sensor 56 of the fuel injection pump 56 (Figure 8) to an actual fuel injection timing is provided for the second fuel injection amount increase/reduction section 84 and the second fuel injection amount increase/decrease section 84 calculates increase or reduction of the fuel injection amount on the basis of fluctuation in the fuel injection timing obtained according to the difference between a target fuel injection timing determined by a basic fuel injection timing calculating section 86 and the actual fuel injection timing from the actual injection timing conversion section 85.

The increases or reductions of the fuel injection amount respectively calculated by the first and second fuel injection amount increase/reduction sections 83 and 84 are added together or subtracted one from the other, and the result is added to the basic fuel injection amount calculated by the basic fuel injection amount calculating section 81, and the result is given to a governor control section 87 as a target fuel injection amount. The governor control section 87 generates a governor drive current on the basis of the target fuel injection amount and the position of the control sleeve detected by the control sleeve position sensor 31, thereby driving the electronic governor 22. Thus the position of the control sleeve 22 is controlled to change the fuel injection amount to suppress fluctuation in the engine speed. The by-cylinder control is effected in this manner.

The basic fuel injection timing calculating section 86 determines the target fuel injection timing on the basis of the engine speed and the target fuel injection amount and inputs it into a fuel injection timing control section 88. The fuel injection timing control section 88 generates a timing control valve control signal on the basis of the target fuel injection timing and the position of the timer piston 39 detected by the timer position sensor 56 and controls the hydraulic pressure acting on the timer piston 39.

When the fuel injection pump FIP has a pump speed sensor 89 as shown in Figure 8, rotational speed pulses generated from the pump speed sensor 89 are converted to an engine speed by the engine speed conversion section 90 in the control unit 60 and input into the basic fuel injection amount calculating section 81 as shown in Figure 7.

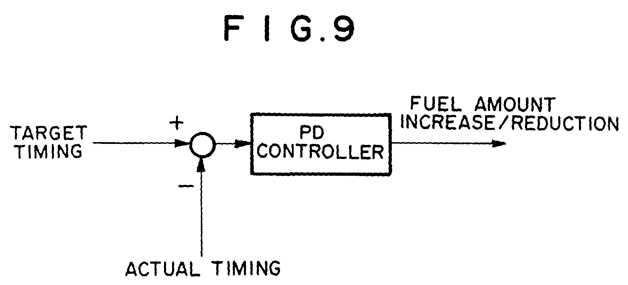

Figure 9 is a control diagram showing the logic for operation of increase and reduction of the fuel injection amount from fluctuation in the fuel injection timing executed by the second fuel injection amount increase/reduction section 84. Here a PD control is effected in order to quickly change the control variable, and the fuel injection amounts for all the cylinders are increased when the actual fuel injection timing is retarded from the target fuel injection timing and reduced when the actual fuel injection timing is advanced from the target fuel injection timing.

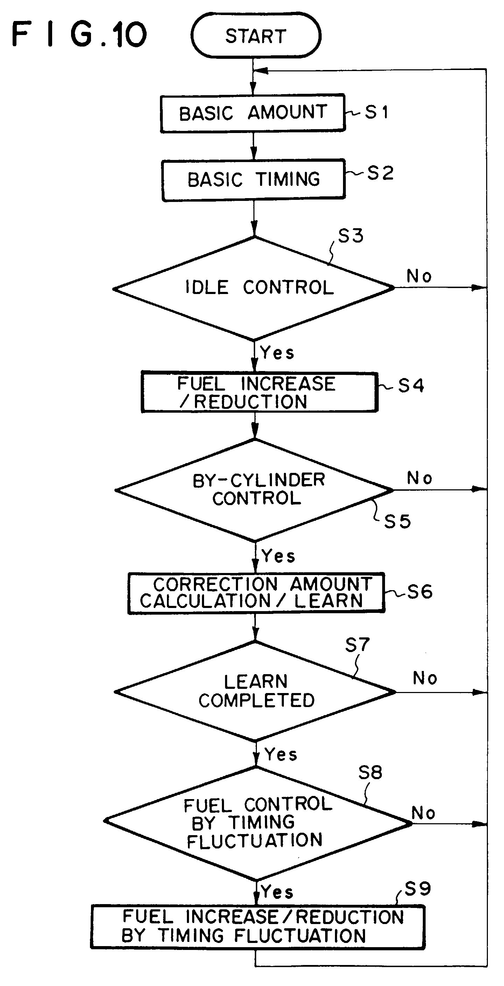

Figure 10 is a flow chart showing an example of the fuel injection amount control routine executed by the control unit 60.

The control unit 60 first calculates the basic fuel injection amount and the basic fuel injection timing on the basis of the engine speed and the accelerator opening. (steps S1 and S2) Then when the conditions for idle speed control are satisfied, the control unit 60 effects fuel injection amount increase/reduction calculation. (steps S3 and S4) When the conditions for by-cylinder control are satisfied, the control unit 60 sets a target engine speed and calculates and learns the correction amount of the fuel injection amount for each cylinder on the basis of the difference between the rotational speed of each cylinder and the target engine speed. (steps S$ and S5) After the learning is completed and the conditions for fuel injection amount increase/reduction control are satisfied, the control unit 60 calculates increase or reduction of the fuel injection amount on the basis of fluctuation in the fuel injection timing. (steps S7 to S9)

In this embodiment, the control unit 60 is arranged to control the fuel injection amount so that fluctuation in the engine speed is suppressed according to fluctuation in the fuel injection timing. Accordingly, fluctuation in the engine speed and deterioration in emission due to fluctuation in the fuel injection pump which is apt to occur especially during idling can be suppressed without increasing the discharge pressure of the fuel injection pump FIP while taking advantage of the hydraulic servo mechanism that the actuating force is large.

The fuel injection amount control based on fluctuation in the fuel injection timing is preferred to be effected together with the by-cylinder control based on the difference between a target engine speed and the actual rotational speed of each cylinder. In this case, the idle speed can be more quickly stabilized by first effecting the by-cylinder control of the fuel injection amount based on the cylinder-to-cylinder difference in the rotational speed (step S6) and then effecting the fuel injection amount control based on the fluctuation in the fuel injection timing (step S9).

## Claims

1. A fuel injection control system for a diesel engine (DE) having a fuel injection pump (FIP) provided with a timer piston (39) which controls the fuel injection timing by a hydraulic pressure and an electronic control system (60) which controls the hydraulic pressure acting on the timer piston (39), the control system (60) comprising
a detecting means (84a, 85) and
a control means (45) which controls the fuel injection amount on the basis of the output of the detecting means (84a, 85)
characterized in that
the detecting means (84a, 85) detects fluctuation in the fuel injection timing under a predetermined operating condition of the engine (DE), and that the control means (45) controls the fuel injection amount according to the fluctuation in the fuel injection timing detected by the detecting means (56) so that the fluctuation in the engine speed is suppressed.

2. A fuel injection control system according to claim 1, in which the detecting means (84a, 85) is provided with an actual fuel injection timing detecting means (85) for detecting an actual fuel injection timing and in which the control means (45) controls the fuel injection amount on the basis of the difference between a target fuel injection timing and the actual fuel injection timing detected by the actual fuel injection timing detecting means (85).

3. A fuel injection control system according to claim 2, in which the control system (45, 56, 60) further comprises a calculating means (86) which calculates the target fuel injection timing under a predetermined operating condition of the engine (DE).

4. A fuel injection control system according to one of the preceding claims, in which said control means (45) controls the fuel injection amount during idling of the engine (DE).

5. A fuel injection control system according to any one of the preceding claims, in which said control means (45) controls the fuel injection amount on the basis of both the fluctuation in the fuel injection timing and the cylinder-to-cylinder difference in the rotational speed.

6. A fuel injection control system according to one of the preceding claims, in which said control means (45) controls the fuel injection amount on the basis of both the difference between a target fuel injection timing and an actual fuel injection timing and the cylinder-to-cylinder difference in the rotational speed.

7. A fuel injection control system according to one of the preceding claims, in which said control means (45) controls the fuel injection amounts for all the cylinders so that the fuel injection amounts for all the cylinders are simultaneously increased or reduced.

8. A fuel injection control system according to claim 5 or 6 in which said control means (45) effects the fuel injection amount control based on the fluctuation in the fuel injection timing after effecting the fuel injection amount control based on the cylinder-to-cylinder difference in the rotational speed.

9. A fuel injection control system according to claim 5, 6 or 8 in which said control means (45) effects the fuel injection amount control based on the difference between a target fuel injection timing and an actual fuel injection timing after effecting the fuel injection amount control based on the cylinder-to-cylinder difference in the rotational speed.

10. A fuel injection control system according to any one of claims 3 to 9 in which the fuel injection amount is increased when the actual fuel injection timing is retarded from the target fuel injection timing and reduced when the actual fuel injection timing is advanced from the target fuel injection timing.

## Patentansprüche

1. Kraftstoffeinspritzregelsystem für einen Dieselmotor (DE) mit einer Kraftstoffeinspritzpumpe (FIP), welche mit einem Zeitmeß- bzw. Zeitgeberkolben (39) versehen ist, welcher den Kraftstoffeinspritzzeitpunkt durch einen hydraulischen Druck regelt bzw. steuert, und einem elektronischen Regel- bzw. Steuersystem (60), welches den hydraulischen Druck, welcher auf den Zeitgeberkolben (39) wirkt, regelt bzw. steuert, wobei das Regelsystem (60) umfaßt
Detektionseinrichtungen bzw. -mittel (84a, 85) und
Regel- bzw. Steuereinrichtungen (45), welche die Kraftstoffeinspritzmenge auf der Basis der Ausgabe der Detektionseinrichtungen (84a, 85) regeln bzw. steuern,
dadurch gekennzeichnet,
daß die Detektionseinrichtungen (84a, 85) eine Fluktuation im Kraftstoffeinspritzzeitpunkt unter einer vorbestimmten Betriebsbedingung des Motors (DE) detektieren und daß die Regel- bzw. Steuereinrichtungen (45) die Kraftstoffeinspritzmenge entsprechend der Fluktuation in dem Kraftstoffeinspritzzeitpunkt regeln, welche durch die Detektionseinrichtungen (56) detektiert wird, so daß eine Fluktuation in der Motordrehzahl unterdrückt ist.

2. Kraftstoffeinspritzregelsystem nach Anspruch 1, in welchem die Detektionseinrichtungen (84a, 85) mit tatsächlichen Kraftstoffeinspritzzeitpunkt-Detektionseinrichtungen (85) zur Detektion eines tatsächlichen Kraftstoff einspritzzeitpunkts versehen sind, und in welchem die Regeleinrichtungen (45) die Kraftstoffeinspritzmenge auf der Basis der Differenz zwischen einem Ziel-Kraftstoffeinspritzzeitpunkt und dem tatsächlichen Kraftstoffeinspritzzeitpunkt regeln bzw. steuern, welcher durch die tatsächlichen Kraftstoffeinspritzzeitpunkt-Detektionseinrichtungen (85) detektiert wird.

3. Kraftstoffeinspritzregelsystem nach Anspruch 2, in welchem das Regelsystem (45, 56, 60) weiters Berechnungseinrichtungen bzw. -mittel (86) umfaßt, welche den Ziel-Kraftstoffeinspritzzeitpunkt unter einer vorbestimmten Betriebsbedingung des Motors (DE) berechnen.

4. Kraftstoffeinspritzregelsystem nach einem der vorhergehenden Ansprüche, in welchem die Regeleinrichtungen (45) die Kraftstoffeinspritzmenge während eines Leerlaufs des Motors (DE) regeln.

5. Kraftstoffeinspritzregelsystem nach einem der vorhergehenden Ansprüche, in welchem die Regeleinrichtungen (45) die Kraftstoffeinspritzmenge auf der Basis sowohl der Fluktuation in dem Kraftstoffeinspritzzeitpunkt und der Zylinder-zu-Zylinder-Differenz der Drehzahl bzw. der Differenz in der Drehzahl von einem Zylinder zu einem anderen Zylinder regeln.

6. Kraftstoffeinspritzregelsystem nach einem der vorhergehenden Ansprüche, in welchem die Regeleinrichtungen (45) die Kraftstoffeinspritzmenge auf der Basis sowohl der Differenz zwischen einem Ziel-Kraftstoffeinspritzzeitpunkt und einem tatsächlichen Kraftstoffeinspritzzeitpunkt und der Zylinder-zu-Zylinder-Differenz in der Drehzahl regeln.

7. Kraftstoffeinspritzregelsystem nach einem der vorhergehenden Ansprüche, in welchem die Regeleinrichtungen (45) die Kraftstoffeinspritzmengen für alle Zylinder regeln, so daß die Kraftstoffeinspritzmengen für alle Zylinder gleichzeitig angehoben oder reduziert werden.

8. Kraftstoffeinspritzregelsystem nach Anspruch 5 oder 6, in welchem die Regeleinrichtungen (45) die Kraftstoffeinspritzmengenregelung basierend auf der Fluktuation in dem Kraftstoffeinspritzzeitpunkt durchführen, nachdem die Kraftstoffeinspritzmengenregelung basierend auf der Zylinder-zu-Zylinder-Differenz in der Drehzahl durchgeführt wurde.

9. Kraftstoffeinspritzregelsystem nach Anspruch 5, 6 oder 8, in welchem die Regeleinrichtungen (45) die Kraftstoffeinspritzmengenregelung basierend auf dem Unterschied zwischen einem Ziel-Kraftstoffeinspritzzeitpunkt und einem tatsächlichen Kraftstoffeinspritzzeitpunkt durchführen, nachdem die Kraftstoffeinspritzmengenregelung basierend auf der Zylinder-zu-Zylinder-Differenz in der Drehzahl durchgeführt wurde.

10. Kraftstoffeinspritzregelsystem nach einem der Ansprüche 3 bis 9, in welchem die Kraftstoffeinspritzmenge erhöht wird, wenn der tatsächliche Kraftstoffeinspritzzeitpunkt gegenüber dem Ziel-Kraftstoffeinspritzzeitpunkt verzögert ist, und reduziert wird, wenn der tatsächliche Kraftstoffeinspritzzeitpunkt dem Ziel-Kraftstoffeinspritzzeitpunkt vorauseilt.

## Revendications

1. Système de commande d'injection de carburant pour un moteur diésel (DE) ayant une pompe (FIP) d'injection de carburant pourvue d'un piston (39) d'avance qui commande le temps d'injection de carburant par une pression hydraulique et un système de commande électronique (60) qui commande la pression hydraulique agissant sur le piston d'avance (39), le système de commande (60) comportant
un moyen de détection (84a, 85) et
un moyen de commande (45) qui commande la quantité de carburant injecté sur la base du signal de sortie du moyen de détection (84a, 85),
caractérisé en ce que
le moyen de détection (84a, 85) détecte une fluctuation dans le temps d'injection de carburant sous des conditions de fonctionnement prédéterminées du moteur (DE), et en ce que le moyen de commande (45) commande la quantité de carburant injecté en fonction de la fluctuation du temps d'injection de carburant détectée par le moyen de détection (56) afin que la fluctuation de la vitesse du moteur soit supprimée.

2. Système de commande d'injection de carburant selon la revendication 1, dans lequel le moyen de détection (84a, 85) est pourvu d'un moyen (85) de détection de temps réel d'injection de carburant destiné à détecter un temps réel d'injection de carburant et dans lequel le moyen de commande (45) commande la quantité de carburant injectée sur la base de la différence entre un temps visé d'injection de carburant et le temps réel d'injection de carburant détecté par le moyen (85) de détection de temps réel d'injection de carburant.

3. Système de commande d'injection de carburant selon la revendication 2, dans lequel le système de commande (45, 56, 60) comporte en outre un moyen de calcul (86) qui calcule le temps visé d'injection de carburant dans des conditions prédéterminées de fonctionnement du moteur (DE).

4. Système de commande d'injection de carburant selon l'une des revendications précédentes, dans lequel ledit moyen de commande (45) commande la quantité de carburant injecté pendant le ralenti du moteur (DE).

5. Système de commande d'injection de carburant selon l'une quelconque des revendications précédentes, dans lequel ledit moyen de commande (45) commande la quantité de carburant injecté sur la base à la fois de la fluctuation du temps d'injection de carburant et de la différence de vitesse de rotation entre des cylindres.

6. Système de commande d'injection de carburant selon l'une des revendications précédentes, dans lequel ledit moyen de commande (45) commande la quantité de carburant injecté sur la base à la fois de la différence entre un temps visé d'injection de carburant et un temps réel d'injection de carburant et de la différence de vitesse de rotation entre des cylindres.

7. Système de commande d'injection de carburant selon l'une des revendications précédentes, dans lequel ledit moyen de commande (45) commande les quantités de carburant injectées pour tous les cylindres afin que les quantités de carburant injectées pour tous les cylindres soient augmentées ou réduites en même temps.

8. Système de commande d'injection de carburant selon la revendication 5 ou 6, dans lequel ledit moyen de commande (45) effectue la commande de la quantité de carburant injectée sur la base de la fluctuation du temps d'injection de carburant après l'exécution de la commande de la quantité de carburant injectée sur la base de la différence de vitesse de rotation entre des cylindres.

9. Système de commande d'injection de carburant selon la revendication 5, 6 ou 8, dans lequel ledit moyen de commande (45) effectue la commande de la quantité de carburant injectée sur la base de la différence entre un temps visé d'injection de carburant et un temps réel d'injection de carburant après l'exécution de la commande de quantités de carburant injectées sur la base de la différence de vitesse de rotation entre des cylindres.

10. Système de commande d'injection de carburant selon l'une quelconque des revendications 3 à 9, dans lequel la quantité de carburant injectée est augmentée lorsque le temps réel d'injection de carburant est retardé par rapport au temps visé d'injection de carburant et est réduite lorsque le temps réel d'injection de carburant est avancé par rapport au temps visé d'injection de carburant.
